# EUROPÄISCHE PATENTSCHRIFT

(11) **EP 0 847 128 B1**
(45) Veröffentlichungstag und Bekanntmachung des Hinweises auf die Patenterteilung: **07.11.2001**
(21) Anmeldenummer: 97121348.3
(22) Anmeldetag: 04.12.1997
(51) Int. Cl.: H02K 9/19

(54) **Elektrische Maschine mit integriertem Wärmetauscher**
Electric machine with an integrated heat exchanger
Machine électrique avec un échangeur thermique intégré

(30) Priorität: 09.12.1996 DE 19651119
(43) Veröffentlichungstag der Anmeldung: 10.06.1998
(73) Patentinhaber: Magnet-Motor Gesellschaft für magnetmotorische Technik mbH, D-82319 Starnberg (DE)
(72) Erfinder: Ehrhart, Peter, Dr., 81375 München (DE); Weck, Werner, Dr., 82319 Starnberg (DE)
(74) Vertreter: Klunker . Schmitt-Nilson . Hirsch

(56) Entgegenhaltungen:
- WO-A-92/16042
- DE-A- 2 455 567
- DE-A- 2 545 304
- DE-A- 4 315 280
- DE-C- 4 407 713
- DE-U- 1 813 190
- DE-U- 1 967 298
- FR-A- 970 228
- FR-A- 2 622 064
- US-A- 3 801 843
- US-A- 5 127 485

## Beschreibung

Die Erfindung betrifft eine elektrische Maschine mit den Merkmalen des Oberbegriffs des Anspruchs 1.

Abhängig von Bauart und Leistung bedürfen elektrische Maschinen, das sind hier speziell drehende Elektromotoren und Generatoren, ab einer bestimmten Größe und Ausnützung einer speziellen Kühleinrichtung.

Aus dem Stand der Technik sind zahlreiche Maßnahmen zum Kühlen von elektrischen Motoren und Generatoren bekannt. Es ist zum Beispiel bekannt, an dem Läufer eines Motors Flügel anzubringen, die im Motorgehäuse einen Kühlungsluftstrom erzeugen. Außerdem ist es bekannt, auf der Motorachse ein Lüfterrad anzuordnen. Außer der Luftkühlung ist noch die Flüssigkühlung bekannt. Hierzu sind speziell in dem Stator der elektrischen Maschine oder in dem Statorträger Kühlkanäle ausgebildet, die über Ein- und Auslaßanschlüsse an einen externen Kühlkreis angeschlossen werden können. Bei Kraftfahrzeugen bietet sich als solcher externer Kühlkreislauf der Kühlkreislauf des wassergekühlten Verbrennungsmotors an. Es gibt auch Motoren mit Kühlkanälen und Anschlüssen, die an eine spezielle Kühlvorrichtung angeschlossen werden müssen, wobei es dem Käufer bzw. Benutzer der elektrischen Maschine überlassen bleibt, die Maschine an einen geeigneten Kühlkreislauf anzuschließen.

Es wurde nun festgestellt, daß es durch das Anschließen der elektrischen Maschine an eine externe Kühlvorrichtung häufig zu Beeinträchtigungen und Beschädigungen der Maschine bzw. deren Kühlsystem kommt. Wenn zum Beispiel Metallspäne durch den Kühlkreislauf in die Maschine gelangen, oder wenn der Kühlkreislauf mit einem ungeeigneten Kühlmittel befüllt wird, kommt es zu erheblichen Beeinträchtigungen beim Betrieb der Maschine. Verunreinigungen in dem Kühlsystem können die Kühleinrichtung im Inneren der Maschine bleibend beschädigen, ohne daß dies sofort erkannt wird.

Die vorliegende Erfindung bezieht sich speziell auf solche elektrische Maschinen, die von dem Benutzer vor der Inbetriebnahme mit einer externen Kühleinrichtung ausgestattet werden müssen, wobei aber dennoch die Gefahr auszuschließen ist, daß etwa bei Verunreinigung des Kühlmittels oder bei Verwendung eines falschen Kühlmittels der externen Kühlung sich eine Beschädigung der maschineneigenen Kühlung oder eine Beeinträchtigung des Betriebs der Maschine ergibt.

Aus der DE 43 15 280 A1 ist eine elektrische Maschine bekannt, die einen geschlossenen, inneren Kühlkreislauf hat, so daß es nicht zu den oben angesprochenen Beschädigungen und Beeinträchtigungen aufgrund eines eigens angeschlossenen Kühlmittelkreislaufs kommen kann. Weitere elektrische Maschinen mit einem inneren, geschlossenen Kühlkreislauf sind bekannt aus der DE 19 67 298 U, FR 2 622 064 A und FR 970 228.

In Übereinstimmung mit dem Oberbegriff des Anspruchs 1 zeigt die US-A-5 127 485 eine elektrische Maschine in Form eines Radmotors für ein elektrisch angetriebenes Fahrzeug. Bei dieser elektrischen Maschine wird die in dem inneren geschlossenen Kühlkreislauf befindliche Kühlmittelpumpe von der Steuerung nach Maßgabe der Differenz zwischen Soll-Drehzahl und Ist-Drehzahl geregelt. Das heißt: Je größer der Abstand der Ist-Drehzahl von der angestrebten Soll-Drehzahl ist, desto stärker wird das Kühlmittel (Öl) umgewälzt.

Aus der DE 44 07 713 ist eine Steuerung für einen Kühlkreislauf einer elektrischen Maschine bekannt, bei der Kühlmittel mit Hilfe einer externen Pumpe durch das Maschinengehäuse geleitet wird. Eine Besonderheit der Steuerung wird darin gesehen, daß der Volumenstrom des Kühlmittels drehzahl- und drehmomentabhängig eingestellt wird. Diese Maßnahme entspricht der oben angesprochenen, aus der US '485 bekannten Maßnahme.

Durch den inneren, geschlossenen Kühlkreislauf ist sichergestellt, daß sich in dem in die elektrische Maschine integrierten "inneren Kühlkreislauf" nur das herstellerseitig eingefüllte Kühlmittel (Wasser oder eine andere Kühlflüssigkeit) befindet, die auf keinen Fall eine Beschädigung des Kühlkreislaufes hervorrufen kann oder den Betrieb der Maschine beeinträchtigt.

Der Benutzer einer mit einer solchen Kühlung ausgestatteten elektrischen Maschine muß zwar dafür sorgen, daß die "externe Wärmesenke" bereitgestellt wird, die zum Beispiel durch das flüssige Kühlmittel einer Kühlung eines Verbrennungsmotors oder durch einen Luftstrom gebildet wird, allerdings hat dabei der Benutzer keine Gelegenheit mehr, durch Unwissenheit oder Unachtsamkeit eine Beeinträchtigung der Maschine oder eine Beschädigung von deren Kühleinrichtung zu verursachen.

Die Erfindung wird in Anspruch 1 definiert. Vorteil hafte Ausgestaltungen der Erfindung sind Gegenstand der weiteren Ansprüche.

Demnach sieht die Erfindung vor, daß die Steuerung als Eingangsgröße die für die im Maschinenbetrieb abgegebene Leistung, das abgeforderte Drehmoment oder einen damit zusammenhängenden Parameterwert empfängt, daraus die zu erwartende Stator-Verlustleistung errechnet, und dementsprechend vorausschauend den Betrieb der Kühlmittelpumpe steuert. Eine solche vorausschauende Steuerung hat den Vorteil, daß die Kühlmittelpumpe immer direkt mit den anfallenden Verlusten geführt wird und keine sogenannten Wärmestaus, zu hohe Kühlmitteltemperatur durch zu spät bzw. verzögert einsetzende Pumpenwirkung, auftreten können.

Die Erfindung ist anwendbar bei Maschinen in Innenläuferbauweise mit radial außen liegendem Stator, gleichermaßen auch bei Maschinen in Außenläuferbauweise mit radial innen liegendem Stator. Der Stator selbst besteht aus Statoreisen und Spulen und ist auf oder an einem Statorträger gelagert. Die Kühlung mittels des inneren Kühlkreislaufs kann dabei auf mehrere Arten bewerkstelligt werden. Zum einen ist es eine indirekte Kühlung, bei der die Verlustwärme des Stators über das Statoreisen nach außen auf den Statorträger geführt wird. Dafür ist eine formschlüssige Lagerung bzw. Verbindung zwischen Stator und Statorträger notwendig, wobei dann die anfallende Wärme mittels des inneren Kühlkreislaufs aus dem Statorträger abgeleitet wird. Zum anderen ist eine direkte Kühlung des Statoreisens und/oder der Spulen des Stators mit der Kühlflüssigkeit des inneren Kühlkreislaufs möglich.

In beiden Fällen, also sowohl bei einer Maschine in Innenläuferbauweise, als auch bei einer Maschine in Außenläuferbauweise, ist der Wärmetauscher erfindungsgemäß ein zylindrischer oder hohlzylindrischer Körper, der direkt an oder in dem Stator bzw. dem Statorträger integriert ist. Wenn dabei die axialen Abmessungen des Körpers denjenigen des Stators bzw. des Statorträgers entsprechen, wird trotz der integrierten Kühlung die Form der Maschine praktisch nicht verändert. Ähnliches gilt für den Fall, daß der Körper bzw. Wärmetauscher an einer Stirnseite, vorzugsweise an beiden Stirnseiten des Stators bzw. des Statorträgers montiert ist und vorzugsweise dessen radiale Abmessungen nicht über-bzw. unterschreitet. Ein bevorzugter Gedanke der Erfindung liegt darin, den Wärmetauscher und den Stator nicht nur funktionell, sondern auch mechanisch zu integrieren. Hierzu sieht die Erfindung vor, daß der Stator bzw. der Statorträger einerseits und der Wärmetauscher andererseits als getrennte, zusammengebaute mechanische Teile ausgeführt sind. In einer Alternative ist vorgesehen, daß der Statorträger und der Wärmetauscher einteilig ausgebildet sind. Der Wärmetauscher selbst wird hier als Statorträger ausgestaltet, hat zum Beispiel die Form eines Gußteils mit darin befindlichen Kühlkanälen. Der Wärmetauscher ist damit Bestandteil der elektrischen Maschine.

Der Wärmetauscher enthält nicht nur die Kanäle für den inneren Kühlkreislauf, sondern außerdem benachbarte Kanäle für den sekundären Kühlkreislauf, der von dem Benutzer der Maschine mit einem geeigneten Kühlmedium versorgt werden muß. Der Wärmetauscher wird hierbei durch die Kanäle des inneren bzw. des äußeren Kühlkreislaufs und dem zwischen den Kanälen befindlichen Material gebildet.

Der Wärmeübergang erfolgt bei der erfindungsgemäßen Maschine also von dem Stator direkt oder indirekt über den Statorträger zu dem inneren Kühlkreislauf, und von der in dem inneren Kühlkreislauf zirkulierenden Kühlflüssigkeit zu einer externen Wärmesenke, die beispielsweise als Sekundär-Kühlkreislauf mit einer Kühlflüssigkeit ausgebildet ist. Man erkennt, daß als externe Wärmesenke auch ein Luft- oder anderer Gasstrom in Betracht kommt.

Es ist besonders bevorzugt, die Kühlmittelverbindungsleitungen zwischen dem zu kühlenden Stator und dem Wärmetauscher nicht außerhalb dieser Teile zu führen, sondern sie innerhalb zu führen. Hierdurch wird zwar die Montageflexibilität herabgesetzt, andererseits jedoch das benötigte Volumen durch die noch höhere Integration noch weiter verringert. Bei dieser Bauart ist es dann besonders günstig, die externen Kanäle, d. h. diejenigen zur äußeren Wärmesenke in unmittelbarer Nachbarschaft zu den inneren Verbindungen zu verlegen. Dadurch wird die effektive Wärmetauscherwirkfläche weiter erhöht.

Wie gesagt, kann als externe Wärmesenke ein Sekundär-Flüssigkeitskreislauf verwendet werden, möglich ist jedoch auch eine externe Luftkühlung, um dem internen Kühlkreislauf Wärmeenergie abzuziehen. Für den Benutzer ist die erfindungsgemäße elektrische Maschine dann eine im Prinzip luftgekühlte Maschine, was in bestimmten Anwendungsfällen vorteilhaft ist, beispielsweise dann, wenn ein Sekundär-Flüssigkeitskreislauf nicht ohne besonderen Aufwand bereitgestellt werden kann.

Aus den oben erläuterten Besonderheiten und Vorteilen der erfindungsgemäßen Maschine und deren spezielle Ausgestaltungen ist ersichtlich, daß durch den erfindungsgemäßen Vorschlag eine klar definierte Kühlungsschnittstelle gebildet wird, an der die externe Wärmesenke anzuschließen ist.

Während bei üblichen flüssigkeitsgekühlten elektrischen Maschinen herstellerseitig bestimmte Spezifikationen vorgegeben wurden, die der Benutzer der Maschine bei dem Anschluß der externen Kühlung und deren Betrieb zu beachten hatte, bestehen derartige Auflagen bei der erfindungsgemäßen Maschine allenfalls nur noch in sehr geringem Umfang. Im Grunde genommen muß der Benutzer der Maschine nur wissen, wieviel Wärmeabführ seine externe Kühlung pro Zeiteinheit leisten muß.

Im folgenden werden Beispiele anhand der Zeichnung näher erläutert. Es zeigen:
- Fig. 1: eine Teil-Längsschnittansicht durch einen Elektromotor in Außenläuferbauweise;
- Fig. 2: eine Teil-Längsschnittansicht durch einen Elektromotor in Innenläuferbauweise;
- Fig. 3: ein schematisches, funktionelles Diagramm einer Ausführungsform einer elektrischen Maschine mit integrierter Kühleinrichtung;
- Fig. 4: eine schematische Radial-Schnittansicht durch den Stator des in Fig. 1 gezeigten Elektromotors mit integriertem Wärmetauscher; und
- Fig. 5: eine schematische Radial-Schnittansicht durch eine gegenüber Fig. 4 abgewandelte Ausführungsform eines Stators mit stirnseitig integriertem Wärmetauscher.

Im folgenden wird ein dauermagnetisch erregter Elektromotor mit elektronischer Kommutierung beschrieben. Dieser Elektromotor kann auch als Generator betrieben werden. Grundsätzlich versteht der Fachmann jedoch, daß die hier beschriebenen Besonderheiten bezüglich der integrierten Kühlung auch bei anderes aufgebauten elektrischen Maschinen eingesetzt werden können.

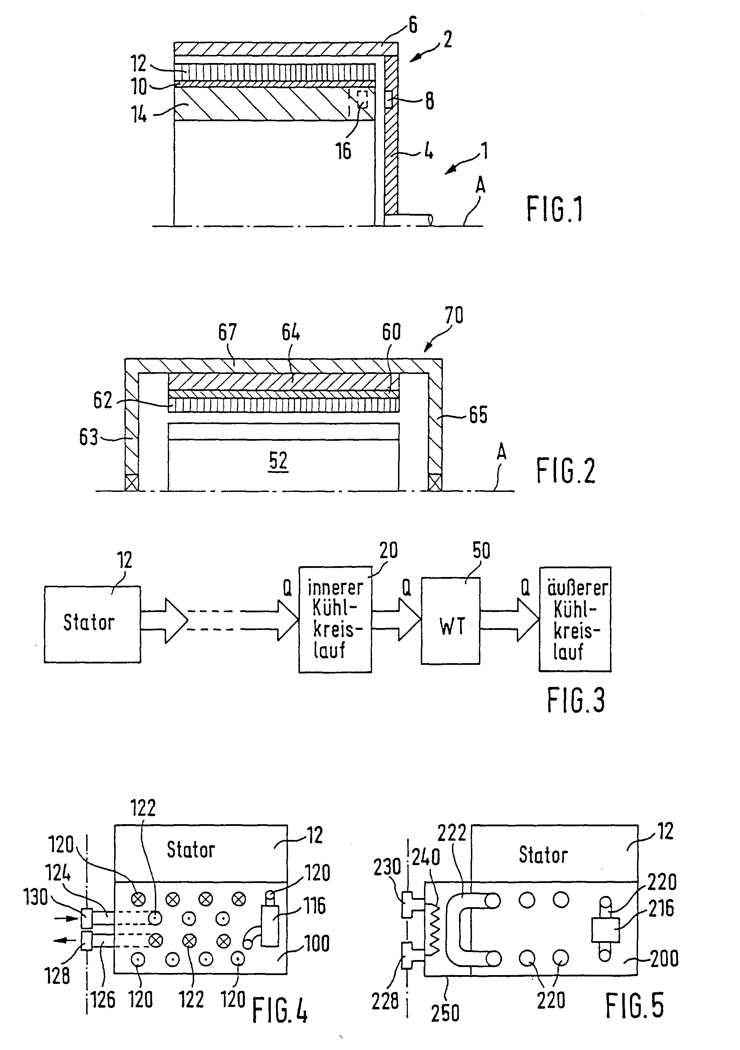

Der in Fig. 1 dargestellte Elektromotor 1 besitzt einen um eine Drehachse A drehenden topfförmigen Rotor 2 mit einem Stirnflächenteil 4 und einem Umfangsteil 6. In dem durch den topfförmigen Rotor gebildeten Hohlraum steht auf einem Statorträger 10 ein Stator 12 mit üblichem Aufbau, das heißt mit Statoreisen und Statorspulen, die hier nicht im einzelnen dargestellt sind.

Der Statorträger 10 und der Stator 12 bilden einen hohlzylindrischen Körper, wobei die Außenfläche des Stators 12 der Innenfläche des Umfangsteils 6 des Rotors 2 über einem Luftspalt gegenübersteht. Die Stromversorgung des Stators 12 und die Schaltung für die elektronische Kommutierung sind hier nicht näher dargestellt, sind dem Fachmann jedoch geläufig.

Auf der Innenseite des Statorträgers 10 befindet sich ein Wärmetauscherkörper 14, zu dem eine Kühlmittelpumpe 16 gehört. Der im folgenden noch näher erläuterte Wärmetauscherkörper 14 mit der Kühlmittelpumpe 16 bildet mit der Kühleinrichtung des Stators einen inneren, geschlossenen Kühlkreislauf, der mit flüssigem Kühlmittel (zum Beispiel Wasser) herstellerseitig gefüllt ist und vor sowie während des Betriebs und Einsatzes des Motors nicht geöffnet wird.

Angetrieben wird die Kühlmittelpumpe durch in den Stirnflächenteil 4 des Rotors 2 eingebaute Magnete 8. Bei der Drehung des Rotors 2 um die Achse A bilden die Magnete 8 mit gegenüberliegenden Teilen der Kühlmittelpumpe 16 eine Art magnetische Kupplung, so daß sich die Kühlmittelpumpe 16 dreht und in dem im folgenden noch näher zu beschreibenden Kühlkreislauf eine Kühlmittelströmung aufrechterhält, so lange sich der Rotor dreht.

Es sei bereits jetzt darauf hingewiesen, daß die Art des Antriebs der Kühlmittelpumpe 16 auch anders gewählt sein kann. Es kann zum Beispiel eine externe Spannungsquelle zum Betreiben einer eingebauten elektrischen Kühlmittelpumpe vorgesehen werden.

Wie aus Fig. 1 ersichtlich ist, ist der Wärmetauscherkörper 14 ähnlich als Hohlzylinder ausgebildet wie der Statorträger 10 und der Stator 12. Die Außenfläche des Wärmetauscherkörpers 14 befindet sich in enger Berührung mit der Innenfläche des Statorträgers 10. Im Betrieb des Motors gelangt folglich Verlustwärme aus dem Stator 12 über den Statorträger 10 in den Wärmetauscherkörper 14 und wird aus diesem in noch zu beschreibender Weise abgeleitet.

In Fig. 1 ist ferner ersichtlich, daß der Wärmetauscherkörper 14 bezüglich des Statorträgers 10 und des Stators 12 nicht nur in radialer Richtung, sondern auch einseitig oder beidseitig axial an dem Statorträger bzw. dem Stator angeordnet sein kann. Praktischerweise würde dann der Wärmetauscher in radialer Richtung bündig mit dem Statorträger auf der Innenseite und dem Stator auf der Außenseite abschließen, so daß sich nur die axiale Baugröße des Motors verändern würde.

Fig. 2 zeigt eine andere Ausführungsform eines Elektromotors. Auch dieser Elektromotor ist ein dauermagnetisch erregter Elektromotor mit elektronischer Kommutierung und kann als Generator betrieben werden. Im Gegensatz zu der Ausführungsform nach Fig. 1 ist der in Fig. 2 gezeigte Elektromotor ein Motor in Innenläuferbauweise. Einem auf der Achse A umlaufenden Rotor 52 liegt außen ein Stator 62 gegenüber, der in üblicher Weise von einem Statorträger 60 getragen wird, der seinerseits auf einem hohlzylindrischen Wärmetauscherkörper 64 angeordnet ist. Die gesamte hohlzylindrische Anordnung aus Stator 62, Statorträger 60 und Wärmetauscherkörper 64 ist an der Innenseite eines Gehäuses 70 montiert, bestehend aus zwei Stirnflächenteilen 63, 65 und einem Umfangsteil 67.

Obschon in Fig. 2 nicht dargestellt, enthält der in den Wärmetauscherkörper 64 integrierte geschlossene Kühlkreislauf eine Kühlmittelpumpe zum Umwälzen der Kühlflüssigkeit.

Wie unten noch ausgeführt werden wird, kann der Wärmetauscherkörper auch gleichzeitig die Funktion des Statorträgers 10 bzw. 60 übernehmen.

Fig. 3 zeigt den funktionellen Zusammenhang der einzelnen Komponenten des Elektromotors mit Kühleinrichtung. Von dem Stator 12 gelangt Verlustleistung beim Betrieb des Motors in Form von Wärmeenergie Q in einen inneren Kühlkreislauf 20 (dieser ist in Fig. 1 und 2 innerhalb Stators 12, 62 bzw. Statorträgers 10, 16 und des des Wärmetauscherkörpers 14 bzw. 64 ausgebildet). Aus dem inneren Kühlkreislauf 20 gelangt Wärmeenergie Q an einen Wärmetauscher 50, der die Wärmeenergie aus der Kühlflüssigkeit des inneren Kühlkreislaufs 20 abzieht und beispielsweise an einen äußeren Kühlkreislauf abgibt. Dieser äußere Kühlkreislauf kann zum Beispiel der Kühlkreislauf eines Verbrennungsmotors eines Kraftfahrzeugs sein, in das der Elektromotor eingebaut ist. Es muß sich aber nicht um einen "Kreislauf" handeln, sondern der Wärmetauscher 50 kann die aus dem inneren Kühlkreislauf abgezogene Wärmeenergie auch beispielsweise über einen Gebläseluftstrom an die Umgebung abgeben.

Der Wärmetauscher 50 sorgt im üblichen Sinn also dafür, daß Wärme von einem Fluid (hier: der Kühlflüssigkeit im inneren Kühlkreislauf 20) auf ein anderes Fluid (hier: die Flüssigkeit oder das Gas im äußeren "Kühlkreislauf") übertragen wird.

In Fig. 4 ist eine erste Variante für die Ausgestaltung der Kühleinrichtung in oder an dem Wärmetauscherkörper 14 nach Fig. 1 dargestellt. Man sieht, daß mit entsprechenden Abwandlungen diese Anordnung auch auf einen Motor in Innenläuferbauweise gemäß Fig. 2 angewendet werden kann.

Gemäß Fig. 4 ist der Wärmetauscherkörper 14 nach Fig. 1 speziell als Wärmetauscherkörper 100 aus einem gut wärmeleitenden Vergußmaterial als hohlzylindrischer Körper ausgebildet und hat gleichzeitig die Funktion des Statorträgers. Eine hier schematisch und funktionell dargestellte Kühlmittelpumpe 116 wälzt Wasser als flüssiges Kühlmittel durch einen ersten internen Kanal 120 um, wobei der Kanal 120 aus einer ersten äußeren und einer zweiten inneren Reihe aus Kühlkanalwindungen besteht. Die Strömungsrichtung ist in den einzelnen Kanalquerschnitten angegeben, wobei ein "X" bedeutet, daß die Strömung in die Zeichnungsebene hinein gerichtet ist, während ein "." bedeutet, daß die Strömung aus der Zeichnungsebene dem Betrachter entgegenläuft.

Die von dem Stator 12 in den Wärmetauscherkörper 100 durch Konvektion übertragene Wärmeenergie wird von dem Kühlwasser in dem Kanal 120 aufgenommen. Der Wärmetauscherkörper 100 übernimmt hierbei gleichzeitig die Funktion des Statorträgers (in einer abgewandelten Ausführungsform kann das Kühlmedium in dem Kanal 120 aber auch die Statorspulen direkt kühlen, d. h. der innere Kühlkreislauf bindet den Stator direkt ein). Zur Abfuhr dieser Wärmeenergie nach außen sind in dem Wärmetauscherkörper 100 außerdem mehrere Windungen eines weiteren Kanals 122 ausgebildet, die den Windungen des Kanals 120 eng benachbart sind, so daß ein intensiver Wärmeaustausch stattfindet. Die Wärmetauscherfunktion des Wärmetauschers wird aus dem Wärmeübergang zwischen den Kanälen 120 und 122 durch das zwischen ihnen befindliche Material gebildet.

Die Windungen des Kanals 122 sind über Anschlußkanäle 124 und 126 seitlich aus dem Wärmetauscherkörper 100 herausgeführt und besitzen Kupplungsstücke 128 und 130, so daß der Kanal 122 an eine Kühlvorrichtung angeschlossen werden kann. Die Kühlvorrichtung kann zum Beispiel die Kühlung eines flüssigkeitsgekühlten Verbrennungsmotors sein. Außerdem kann man den Wärmetauscher extern auch mit Luft betreiben. Hierzu wird zum Beispiel ein Gas-(Luft)-Anschluß an die Anschlüsse 128, 130 angeflanscht.

Fig. 5 zeigt eine andere Ausführungsform für den integrierten Wärmetauscher des Elektromotors.

Fig. 5 zeigt schematisch eine Kühlmittelpumpe 216, die Kühlwasser durch einen Kanal 220 pumpt, der aus zwei Lagen von Leitungswindungen in dem Statorträger 200 besteht. An der linken Stirnseite des Statorträgers 200 ist als separates Bauteil ein Wärmetauscherblock 250 angeordnet, durch den ein Stück des Kanals 220 als Kanalstück 222 hindurchgeführt ist. In dem Wärmetauscherblock 250 wird die Wärmeenergie aus dem Kühlwasser in dem Kanalsystem 220, 222 auf ein äußeres Kühlfluid übertragen, welches in einen angedeuteten Fluidkanal 240 strömt. Über Anschlüsse 228 und 230 kann die Kühleinrichtung gemäß Fig. 5 an eine externe Wärmesenke angeschlossen werden, also wiederum beispielsweise an den Kühlkreislauf eines Verbrennungsmotors an einen weiteren Wärmetauscher, oder an einen Luftanschluß.

Man sieht, daß die funktionelle und geometrische Ausgestaltung der erfindungsgemäßen elektrischen Maschine vielfach abgewandelt werden kann, ohne vom Grundgedanken der Erfindung abzuweichen. Eine Besonderheit der Erfindung liegt auch in der Ansteuerung der Kühlmittelpumpe (16 in Fig. 1; 116 in Fig. 4 und 216 in Fig. 5). Wie eingangs erwähnt, ist die elektrische Maschine als dauermagnetisch erregte Maschine mit elektronischer Kommutierung ausgebildet. Die hierzu vorgesehene elektrische Schaltung kann auch eine Steuerschaltung aufweisen, die für den Betrieb der Kühlmittelpumpe sorgt. Diese Steuerschaltung kann zum Beispiel als Eingangsgrößen Betriebsparameter empfangen, die sich auf den anstehenden Betrieb der elektrischen Maschine beziehen. Wenn der Motor (oder Generator) auf eine bestimmte Leistungsstufe eingestellt wird, so kann die Steuerschaltung ein entsprechendes Signal auswerten und beispielsweise über einen Tabellenspeicher einen Wert ermitteln, der dem Betrieb der Kühlmittelpumpe entspricht. Über diesen Betrieb der Kühlmittelpumpe läßt sich also das Kühlmittel in dem inneren, geschlossenen Kühlkreislauf bereits zu Beginn des Betriebs der Maschine so einstellen, daß gleichzeitig mit Entstehung der Verlustwärme im Stator dafür gesorgt ist, daß die zu erwartende Verlustwärme in geeigneter Weise abgeführt wird. Man erkennt, daß mit einer derartigen "vorausschauenden" Steuerung und Regelung die Maximalleistung der Kühlmittelpumpe nicht so hoch sein muß wie bei einer anderen Regelung, beispielsweise einer hier ebenfalls möglichen, jedoch weniger bevorzugten thermostatischen Regelung; denn zu erwartende Spitzenwerte bei der Verlustleistung im Stator können durch den vorausschauenden Kühlungsbetrieb teilweise abgefangen werden.

In Abwandlung der oben beschriebenen Ausführungsform können die Kühlkanäle auch derart angeordnet sein, daß die in ihnen fließende Kühlflüssigkeit direkt die Statorspulen umspült, also eine Spulendirektkühlung erzeugt wird. Hierbei ist das beschriebene Wärmetauscherprinzip besonders wirksam, da etwaige im externen Kühlkreislauf enthaltene Fremdkörper nicht an die Spulen gelangen können.

## Patentansprüche

1. Elektrische Maschine, mit einem Stator (12), einem Rotor (2, 52), einer Kühleinrichtung zum Kühlen des Stators (12), mit einem inneren geschlossenen Kühlkreislauf (20; 120; 220; 222) mit eigener Kühlmittelpumpe (16; 116; 216), in dem eine Kühlflüssigkeit umgewälzt wird, welche als Wärmesenke für in dem Stator anfallende Wärmeenergie dient, und der integraler Bestandteil der Maschine ist und einen Wärmetauscher (14; 64; 100; 200) aufweist, welcher Wärmeenergie aus dem Kühlkreislauf an eine externe Wärmesenke abgibt, und mit einer Steuerung,
die als Eingangsgröße die abgeforderte Maschinenleistung oder einen damit zusammenhängenden Wert empfängt und vorausschauend den Betrieb der Kühlmittelpumpe (16, 116; 216) steuert,
**dadurch gekennzeichnet,**
**daß** die Steuerung aus der abgeforderten Maschinenleistung oder einem damit zusammenhängenden Wert die zu erwartende Stator-Verlustleistung errechnet und dementsprechend den Betrieb der Kühlpumpe (16, 116; 216) steuert

2. Maschine nach Anspruch 1, in
a) Innenläuferbauweise mit radial außen liegendem Stator (62); oder
b) Außenläuferbauweise mit radial innen liegendem Stator (12),
wobei der aus Statoreisen und Spulen gebildete Stator (12, 62) auf einem Statorträger (10, 60, 100, 200) gelagert ist und die Kühlflüssigkeit entweder den Stator durch Umspülen direkt kühlt oder durch Durchströmen des Statorträgers indirekt kühlt.

3. Maschine nach Anspruch 1 oder 2,
**dadurch gekennzeichnet,**
**daß** der Wärmetauscher als zylindrischer oder hohlzylindrischer Wärmetauscherkörper (14, 64, 100, 200) ausgebildet ist und direkt an oder in dem Stator bzw. dem Statorträger integriert ist.

4. Maschine nach Anspruch 3,
**dadurch gekennzeichnet,**
**daß** der Körper (100; 200; 14; 64) in seinen axialen Abmessungen etwa dem Stator (12; 62) bzw. dem Statorträger (10; 60) entspricht.

5. Maschine nach Anspruch 1 oder 2,
**dadurch gekennzeichnet,**
**daß** der Körper an einer Stirnseite, vorzugsweise an beiden Stirnseiten des Stators bzw. des Statorträgers montiert ist und vorzugsweise dessen radiale Abmessungen nicht über- bzw. unterschreitet.

6. Maschine nach einem der Ansprüche 2 bis 5,
**dadurch gekennzeichnet,**
**daß** der Stator bzw. Statorträger einerseits und der Wärmetauscher andererseits als getrennte, zusammengebaute mechanische Teile (10, 12; 100; 200; 60, 62) ausgeführt sind.

7. Maschine nach einem der Ansprüche 2 bis 5,
**dadurch gekennzeichnet,**
**daß** der Statorträger (100; 200) und der Wärmetauscher einteilig ausgebildet sind.

8. Maschine nach einem der Ansprüche 1 bis 7,
**dadurch gekennzeichnet,**
**daß** der innere Kühlkreislauf erste interne Kanäle (120; 220) zwischen Stator oder Statorträger und Wärmetauscher aufweist.

9. Maschine nach Anspruch 8,
**dadurch gekennzeichnet,**
**daß** zweite interne Kanäle (122) vorhanden sind, die mit den ersten internen Kanälen (120) den Wärmetauscher bilden und dazu den ersten Kanälen (120) benachbart sind.

10. Maschine nach einem der Ansprüche 1 bis 9,
**dadurch gekennzeichnet,**
**daß** die externe Wärmesenke durch Kühlflüssigkeit, zum Beispiel Wasser, gebildet wird.

11. Maschine nach einem der Ansprüche 1 bis 9,
**dadurch gekennzeichnet,**
**daß** die externe Wärmesenke Luft ist.

12. Maschine nach einem der Ansprüche 1 bis 11,
**dadurch gekennzeichnet,**
**daß** die Maschine einen dauermagnetisch erregten Läufer (2, 52) und elektronische Kommutierung besitzt.

## Claims

1. An electric machine comprising a stator (12), a rotor (2, 52), a cooling means for cooling the stator (12), an internal, closed cooling circuit (20; 120; 220; 222) which has a coolant pump (16; 116; 216) of its own and has a cooling liquid circulating therein serving as a heat sink for thermal energy arising in said stator, and which is integral part of the machine and includes a heat exchanger (14; 64; 100; 200) which delivers thermal energy from the cooling circuit to an external heat sink, and comprising a control which receives as input variable the demanded machine output or a value correlated therewith and which controls the operation of the cooling pump (16, 116; 216) in foresighted manner,
**characterized in that** said control calculates from said demanded machine output or a value correlated therewith, the stator power dissipation to be expected and controls the operation of the cooling pump (16, 116; 216) accordingly.

2. The machine of claim 1, in
a) internal rotor-type construction having the stator (62) located radially outside; or
b) external rotor-type construction having the stator (12) located radially inside,
wherein the stator (12, 62) formed of stator iron and coils is supported on a stator support (10, 60, 100, 200) and the cooling liquid cools the stator either directly by flowing around the same or indirectly by flowing through said stator support.

3. The machine of claim 1 or 2,
**characterized in that** the heat exchanger is formed as cylindrical or hollow cylindrical heat exchanger body (14, 64, 100, 200) and is directly integrated on or in the stator or the stator support, respectively.

4. The machine of claim 3,
**characterized in that** said body (100; 200; 14; 64), in the axial dimensions thereof, corresponds approximately to the stator (12; 62) or the stator support (10; 60), respectively.

5. The machine of claim 1 or 2,
**characterized in that** said body is mounted on a face side, preferably on both face sides of the stator or stator support, respectively, and preferably is not larger than or smaller than the radial dimensions thereof.

6. The machine of any of claims 2 to 5,
**characterized in that** the stator or stator support on the one hand and the heat exchanger on the other hand are designed as separate, built together mechanical parts (10, 12; 100; 200; 60, 62).

7. The machine of any of claims 2 to 5,
**characterized in that** the stator support (100; 200) and the heat exchanger are of integral design.

8. The machine of any of claims 1 to 7,
**characterized in that** the internal cooling circuit comprises first internal channels (120; 220) between stator or stator support and heat exchanger.

9. The machine of claim 8,
**characterized in that** there are provided second internal channels (122) constituting together with said first channels (120) the heat exchanger and being adjacent said first channels (120) to this end.

10. The machine of any of claims 1 to 9,
**characterized in that** the external heat sink is constituted by cooling liquid, e.g. water.

11. The machine of any of claims 1 to 9,
**characterized in that** the external heat sink is air.

12. The machine of any of claims 1 to 11,
**characterized in that** the machine comprises a permanent-magnet excited rotor (2, 52) and electronic commutation.

## Revendications

1. Machine électrique comportant un stator (12), un rotor (2, 52), un dispositif de refroidissement pour le refroidissement du stator (12), avec un circuit de refroidissement interne fermé (20 ; 120 ; 220 ; 222) avec sa propre pompe de réfrigérant (16 ; 116 ; 216), dans lequel circule un liquide réfrigérant qui sert de puits de chaleur pour l'énergie thermique produite dans le stator, et qui fait partie intégrante de la machine et comporte un échangeur de chaleur (14 ; 64 ; 100 ; 200), lequel cède de l'énergie thermique provenant du circuit de refroidissent à un puits de chaleur externe, et comportant une commande qui reçoit, en tant que grandeur d'entrée, la puissance de machine exigée ou une valeur liée à celle-ci, et qui commande par anticipation le fonctionnement de la pompe à réfrigérant (16, 116 ; 216), **caractérisée en ce que** la commande calcule la perte de puissance prévisible du stator, à partir de la puissance de machine exigée ou d'une valeur liée à celle-ci, et commande en conséquence le fonctionnement de la pompe à réfrigérant (16, 116 ; 216).

2. Machine selon la revendication 1
a) dans une construction à rotor intérieur avec stator (62) situé radialement à l'extérieur ; ou
b) dans une construction à rotor extérieur avec stator (12) situé radialement à l'intérieur,
le stator (12, 62) formé par des fers de stator et des bobines, étant monté sur un porte-stator (10, 60, 102, 100) et le liquide réfrigérant refroidissant le stator soit directement par immersion, soit indirectement, en circulant à travers le porte-stator.

3. Machine selon la revendication 1 ou 2, **caractérisée en ce que** l'échangeur de chaleur est réalisé en tant que corps d'échangeur de chaleur (14, 64, 102, 100) cylindrique ou cylindrique creux et est directement intégré sur ou dans le stator, respectivement le porte-stator.

4. Machine selon la revendication 3, **caractérisée en ce que** le corps (100 ; 200 ; 14 ; 64) correspond dans ses dimensions axiales approximativement au stator (12 ; 62), respectivement au porte-stator (10 ; 100).

5. Machine selon la revendication 1 ou 2, **caractérisée en ce que** le corps est monté sur un côté frontal, de préférence sur les deux côtés frontaux du stator, respectivement du porte-stator, et de préférence il ne dépasse pas ses dimensions radiales, respectivement n'est pas inférieur à celles-ci.

6. Machine selon l'une des revendications 2 à 5, **caractérisée en ce que** le stator, respectivement le porte-stator d'une part et l'échangeur de chaleur d'autre part sont réalisés en tant qu'éléments mécaniques (10, 12 ; 100 ; 200 ; 60, 62) séparés et assemblés.

7. Machine selon l'une des revendications 2 à 5, **caractérisée en ce que** le porte-stator (100 ; 200) et l'échangeur de chaleur sont réalisés d'une seule pièce.

8. Machine selon l'une des revendications 1 à 7, **caractérisée en ce que** le circuit de refroidissement interne comporte des premiers canaux internes (120 ; 220) entre le stator ou le porte-stator et l'échangeur de chaleur.

9. Machine selon la revendication 8, **caractérisée en ce que** sont prévus des deuxièmes canaux internes (122) qui forment l'échangeur de chaleur, avec les premiers canaux internes (120), et qui à cet effet sont voisins des premiers canaux (120).

10. Machine selon l'une des revendications 1 à 9, **caractérisée en ce que** le puits de chaleur externe est formé par un liquide réfrigérant, par exemple de l'eau.

11. Machine selon l'une des revendications 1 à 9, **caractérisée en ce que** le puits de chaleur externe est de l'air.

12. Machine selon l'une des revendications 1 à 11, **caractérisée en ce que** la machine possède un rotor (252) excité par un aimant permanent et une commutation électronique.
